# EUROPEAN PATENT APPLICATION

(11) **EP 2 781 539 A1**
(43) Date of publication of application: **24.09.2014**
(21) Application number: 13159974.8
(22) Date of filing: 19.03.2013
(51) Int. Cl.: C08J 5/04, C08J 5/24

(54) **Fibre reinforced plastic composite, method of manufacturing thereof, plastic composite starting material for manufacturing the fibre reinforced plastic composite, and component of a wind turbine comprising the fibre reinforced plastic composite**

(71) Applicant: Siemens Aktiengesellschaft, 80333 München (DE)
(72) Inventor: Grove-Nielsen, Erik, 7870 Roslev (DK)

(57) **Abstract**

The invention relates to a fibre reinforced plastic composite comprising a matrix material (1), a plurality of fibres for reinforcement of the matrix material (1), and at least one thermoplastic additive material (2) for enhancing a fracture toughness of the fibre reinforced plastic composite, wherein the thermoplastic additive material (2) is dissolved in the matrix material (1). The thermoplastic additive material (2) may initially, i.e. before dissolution in a base material, be in a powdery or granulate form. Additionally, the invention relates to a plastic composite starting material, suitable for a fibre reinforced plastic composite, and a method of manufacturing a fibre reinforced plastic composite. Finally the invention also relates to a component of a wind turbine comprising a fibre reinforced plastic composite.

## Description

### FIELD OF INVENTION

The present invention relates to a plastic composite which is reinforced by a plurality of fibres. Additionally, the invention relates to a plastic composite starting material and a method of manufacturing a fibre reinforced plastic composite. Finally the invention also relates to a component of a wind turbine, the component comprising a fibre reinforced plastic composite.

### BACKGROUND OF THE INVENTION

Fibre reinforced plastic composites are used in a variety of technical products such as cars, storage tanks and wind turbine blades. A fibre reinforced plastic composite comprises a matrix material and fibres which reinforce the matrix material. Fibres are in general well suited to reinforce the matrix material because fibres, such as glass fibres, carbon fibres, natural fibres or other fibres have a high strength and a high stiffness. Fibres may come in a form of a roving bundle or a fabric or as randomly oriented fibres. Typically these fibres are located and fixed in the matrix material.

An advantage of a fibre reinforced plastic composite is thus that it is relatively stiff. However, a disadvantage and a problem of a fibre reinforced plastic composite is that it can be relatively brittle, due to the nature of the matrix material, which itself can be brittle.

In order to ensure a sufficient strength and fracture toughness of an object made out of a fibre reinforced plastic composite, up to now the object has been typically simply enlarged to an extent so that fatigue cracks are avoided. However, a simply thicker object requires more material and more labour force. Hence costs of the final object rise. Additionally, simply enlarging the object is not sustainable with regard to the amount of material required for fabrication of the object.

Thus there exists an urgent need to provide a fibre reinforced plastic composite with enhanced fracture toughness.

### SUMMARY OF THE INVENTION

This objective is achieved by the independent claims. The dependent claims describe advantageous developments and modifications of the invention.

In accordance with the invention there is provided a fibre reinforced plastic composite comprising a matrix material, a plurality of fibres for reinforcement of the matrix material, and at least one thermoplastic additive material for enhancing a fracture toughness of the fibre reinforced plastic composite. The thermoplastic additive material is dissolved in the matrix material.

A composite, which is also called a composite material or a composition material, is a material made of two or more individual materials with differing physical and/or chemical properties. When the individual materials are combined, a composite originates with characteristics which are different from that of the individual materials. The individual materials remain separate and distinct within a finished structure of the composite.

Examples of a composite include a composite building material such as cement or concrete, a reinforced plastic such as a fibre reinforced polymer, a metal composite, or a ceramic composite. A further example of a composite is a cermet, which is a composite comprising a ceramic and a metal.

A fibre reinforced plastic composite is a plastic composite, reinforced with fibres.

A fibre reinforced plastic composite may be manufactured by curing a mixture comprising a plastic composite starting material and a plurality of fibres. The plastic composite starting material may comprise a base material and at least one thermoplastic additive material for enhancing a fracture toughness of the fibre reinforced plastic composite.

The term "matrix material" thus refers to the cured base material, i.e. to the base material once hardened.

Furthermore, the matrix material may partially or completely envelope the fibres to protect them from cuts and notches that would reduce the strength of the fibres. Finally, another important purpose of the matrix material is to transfer forces to the fibres.

The plurality of fibres may comprise glass fibres, e.g. textile glass fibres. The plurality of fibres may also comprise carbon fibres which may be created by carbonisation of polyacrylonitrile fibres, pitch resins or rayon at high temperatures. Finally, the plurality of fibres may also comprise aramid fibres.

The matrix material may comprise a thermoplastic matrix material. The thermoplastic additive material and the thermoplastic matrix material are in the following also simply denoted as a thermoplastic material.

A thermoplastic material, which is also called a thermosoftening plastic material, is a material that becomes pliable or moldable above a specific temperature, and returns to a solid state, i.e. a stiff state, upon cooling. In other words, a thermoplastic material becomes reversibly malleable or deformable under the influence of thermal energy.

The enhanced fracture toughness of the fibre reinforced plastic composite implies an increased crack resistance - with regard to the state of the art - which subsequently implies an increased fatigue resistance - with regard to the state of the art - of an object made of the improved fibre reinforced plastic composite. The thermoplastic additive material may initially, i.e. before dissolution in the base material, be in a powdery or granulate form.

The thermoplastic additive material may comprise a polymer. A polymer comprises a plurality of monomers and is arranged in a polymer chain. A monomer may also be described as a molecule that binds chemically to other molecules to form a polymer.

A plurality of polymer chains may be connected with each other by physical bonds and/or chemical bonds, e.g. covalent bonds, van der Waals bonds, electrostatic bonds and/or hydrogen bonds.

Before dissolution of the thermoplastic additive material in the base material, the thermoplastic additive material is advantageously arranged in a network of chemical covalent bonds. After dissolution, the covalent bonds are dissolved and the thermoplastic additive material may be arranged in form of single polymer chains.

An object comprising a fibre reinforced plastic composite with a thermoplastic additive material features several important advantages compared to another object comprising a fibre reinforced plastic composite without a thermoplastic additive material:
- fracture toughness of the matrix material and thus of the object is improved compared to the state of the art by means of the thermoplastic additive material;
- fatigue properties, e.g. fatigue resistance, of the object are improved compared to the state of the art;
- the object may possibly be lighter compared to the state of the art;
- the object can be manufactured more inexpensively compared to the state of the art;
- damping of the object may be increased compared to the state of the art, as more energy is dissipated in the thermoplastic material.

An object could be entirely fabricated by a fibre reinforced plastic composite with a thermoplastic additive material. However, it may also be advantageous if only a part or a section of the object comprises the fibre reinforced plastic composite with the thermoplastic additive material. The section or the part with the thermoplastic additive material might be chosen for an area that requires a high structural damping or other properties deriving from addition of dissolved thermoplastic additive material. A reduced damping may be advantageous as it may reduce a natural oscillation, also called an eigen oscillation.

In a first embodiment the thermoplastic additive material comprises a polymer.

In particular, the thermoplastic additive material may comprise a plurality of polymer chains.

In a further embodiment the matrix material is a thermosetting material, in particular a thermosetting polymer.

A thermosetting material, also known as a thermoset, is a material that irreversibly cures. A cure may be done through heat, through a chemical reaction, or through irradiation such as electron beam processing. A base material for a thermoset material may be liquid and/or malleable prior to curing. It may furthermore be designed to be moulded into a final form. Once cured, a thermoset material is irreversibly hardened.

In general, a material cannot feature properties of a thermoplastic material and a thermosetting material at the same time.

For many objects and many operation conditions, a durable and non-elastic matrix material is advantageous. It is desirable that after curing the thermosetting matrix material remains stiff and cannot be re-melted or deformed.

In another embodiment the matrix material comprises at least one material which is selected from the group consisting of polyester, polyurethane, a biopolymer and a resin, in particular an epoxy resin.

An epoxy resin, also known as a polyepoxid, is a reactive prepolymer and/or a polymer which contains an epoxy group. An epoxy resin may be cross-linked, either with itself through catalytic homopolymerisation, or with a range of co-reactants including polyfunctional amines, acids, phenols, alcohols and thiols.

The co-reactants are referred to as hardeners or curatives, and the cross-link reaction may be referred to as curing. Advantages of an epoxy resin are its favourable mechanical properties, a high temperature resistance and a high chemical resistance. Furthermore, epoxy resin is readily available.

A biopolymer is produced by living organisms. A biopolymer comprises monomeric units that are covalently bonded to form a larger structure. Biopolymers include for example polynucleotides such as ribonucleic acid (RNA) or deoxyribonucleic acid (DNA), polypeptides and polysaccharides.

In a further embodiment the matrix material comprises a thermoplastic matrix material, in particular acrylonitrile butadiene styrene and/or nylon.

The thermoplastic matrix material may be a solid, meltable thermoplastic material. The thermoplastic matrix material may be meltable such that it is able to blend with the fibres.

In another embodiment the thermoplastic additive material comprises polyvinyl butyral (PVB) and/or polyethylene terephthalate (PET).

PVB is for example used for laminated safety glass for e.g. automobile wind shields. PVB may be tough and ductile. This is advantageous and beneficial for an object made of fibre reinforced plastic composite.

In a preferred embodiment a ratio of a weight of the thermoplastic additive material and a weight of the matrix material is selected from a range of 0.0005 to 0.2, in particular from a range of 0.001 to 0.1.

In other words, the thermoplastic additive material may be added in wt% of 0.05% to 20% of a weight of the matrix material, e.g. the thermosetting resin.

Thus, a certain percentage of the thermoplastic additive material with regard to the matrix material may define a viscosity of the liquid plastic composite starting material. Additionally, the percentage of thermoplastic additive material with regard to the matrix material may also be used to calibrate and fix mechanical properties of the fibre reinforced plastic composite, e.g. of a cured resin.

In another embodiment a ratio of a weight of the matrix material and a weight of the thermoplastic additive material is selected from a range of 0.0005 to 0.2, in particular from a range of 0.001 to 0.1.

An alternative of 0.05% to 20% of a weight of the matrix material in a main component of thermoplastic additive material might be relatively difficult and troublesome to fabricate, however it may be possible and advantageous in a specific operation condition.

In another embodiment the plurality of fibres comprises a fibre material. The fibre material comprises an elastic modulus exceeding 50 GPa, in particular exceeding 70 GPa, and/or the matrix material comprises an elastic modulus below 5 GPa, in particular below 3 GPa.

An elastic modulus, which is also called a modulus of elasticity or a Young's modulus, is a mathematical description of an object's or substance's tendency to be deformed elastically, i.e. non-permanently, when a force is applied to it. The stiffer a material is, the higher is its elastic modulus. Thus, the elastic modulus describes a tensile elasticity, or a tendency of an object out of the material to deform along an axis when opposing forces are applied along that axis. The elastic modulus is thus defined as a ratio of tensile stress to tensile strain.

The stiffness of the fibre material, expressed by its elastic modulus, may preferably be smaller than 500 GPa, in particular smaller than 300 GPa.

The invention is also directed to a plastic composite starting material. The plastic composite starting material comprises a base material and a thermoplastic additive material for enhancing a fracture toughness of a fibre reinforced plastic composite. The thermoplastic additive material is dissolved in the base material.

Thus the plastic composite starting material is arranged and prepared for being transferred into the fibre reinforced plastic composite, thus it is suitable for manufacturing a fibre reinforced plastic composite. If for example the base material comprises a resin and the resin is cured, then the resin is called a matrix material after curing.

In a preferred embodiment the base material comprises at least one kind of a liquid thermosetting resin.

Liquid thermosetting resin has an advantage to be readily available and easy to process. Furthermore, liquid thermosetting resin may be well suited as a solvent for the thermoplastic additive material.

In another preferred embodiment the plastic composite starting material comprises a curing agent.

Curing refers to toughening or hardening of a polymer material by cross-linking of polymer chains. A process of curing may be beneficially influenced by a curing agent. Advantages of using a curing agent are e.g. a good controllability of the curing process and a potentially steadier and smoother curing process compared to a curing process without a curing agent.

A base material may be referred to as cured if 90% percent of a weight, in particular 95% percent of a weight of the base material are hardened.

In a further embodiment the plastic composites starting material is arranged and prepared for manufacturing a fibre reinforced plastic composite, the fibre reinforced plastic composite comprising a matrix material, at least one fibre and the thermoplastic additive material. Furthermore, the plastic composite starting material comprises at least one coupling agent for coupling the matrix material and/or the thermoplastic additive material with the fibre.

To enhance a transfer of forces from the fibre to the matrix material, the coupling agent may be applied to a surface of a fibre. This process is called sizing of the fibre.

In a preferred embodiment the coupling agent comprises silane.

The invention is also directed to a component of a wind turbine, in particular to a wind turbine rotor blade, comprising a fibre reinforced plastic composite as described above.

Requirements that are imposed on components of a wind turbine are challenging. The components shall be for example robust, durable and affordable. A fibre reinforced plastic composite according to the invention may be highly beneficial for a component of a wind turbine. Components of a wind turbine include a nacelle, a composite tower and, in particular, a wind turbine rotor blade. Advantages of the fibre reinforced plastic component that have been mentioned already, such as enhanced fracture toughness, improved fatigue properties, light weight, are particularly important and beneficial for a wind turbine rotor blade.

Finally, the invention is directed to a method of manufacturing a fibre reinforced plastic composite. The fibre reinforced plastic composite comprises a thermoplastic additive material. The method comprises a provision of a mixture comprising a plurality of fibres and a plastic composite starting material, wherein the plastic composite starting material is obtained by dissolving the thermoplastic additive material in a base material, and a curing of the mixture.

The fibre reinforced plastic composite is particularly suited for a wind turbine, preferably for a wind turbine rotor blade.

Curing may comprise an ultraviolet radiation, and electron beam irradiation or an application of heat. More specifically, curing may comprise a heat treatment with a temperature lying in between 40°C and 300°C. This heat treatment may be applied during 2 hours to 10 hours to the base material. Exemplarily, the mixture may be cured at 60°C for 6 hours.

The aspects defined above and further aspects of the present invention are apparent from the examples of embodiment to be described hereinafter and are explained with reference to the examples of embodiment.

### BRIEF DESCRIPTION OF THE DRAWINGS

Embodiments of the invention are now described, by way of example only, with reference to the accompanying drawings, of which:
- FIG. 1:: shows a spatial framework of a cured thermosetting resin;
- FIG. 2:: shows a spatial framework of a cured thermosetting resin with incorporated chemically dissolved thermoplastic additive material; and
- FIG. 3:: shows a single fibre with a coupling agent.

The illustration in the drawing is schematically.

### DETAILED DESCRIPTION OF THE DRAWINGS

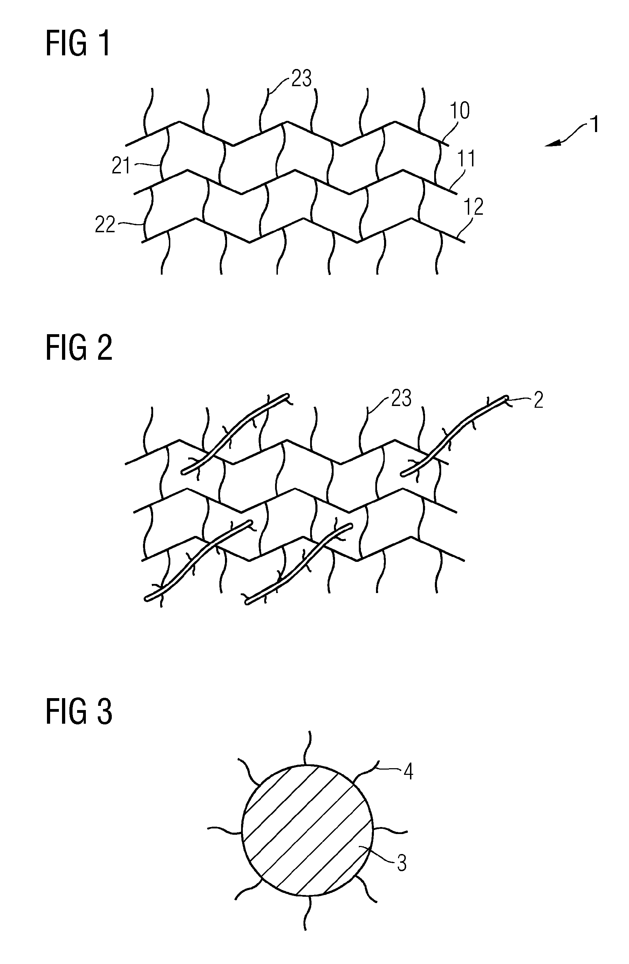

Referring to FIG. 1, a special framework of a cured thermosetting resin, acting as a matrix material 1 of a fibre reinforced plastic composite is shown. The thermosetting resin comprises a plurality of polymer chains, including a first polymer chain 10, a second polymer chain 11 and a third polymer chain 12. The second polymer chain 11 is connected with the first polymer chain 11 by a first cross-link 21. Additionally, the second polymer chain 11 is connected with the third polymer chain 12 by a second cross-link 22. As can be seen in FIG. 1, the plurality of polymer chains forms a special framework and is bonded with each other.

Each polymer chain of the plurality polymer chains comprises a plurality of monomers. A monomer of the plurality of monomers may comprise a reactive functional group. Exemplarily, in FIG. 1 a first monomer comprises a first free radical end 23.

In FIG. 2 a special framework of a cured thermosetting resin with incorporated chemically dissolved thermoplastic additive material 2 is shown, the cured thermosetting resin acting as matrix material of a fibre reinforced plastic composite. Again, the polymer chains are bonded together by cross-links. Additionally, it can be seen that chemically dissolved thermoplastic additive material 2 are incorporated and attached to the cured thermosetting resin.

Finally, FIG. 3 shows a fibre 3 in a cross-sectional view surrounded by cured thermosetting resin. A sizing molecule acting as a coupling agent 4 is connected and attached to a periphery of the fibre 3. In this example the sizing molecule comprises silane.

## Claims

1. Fibre reinforced plastic composite comprising
- a matrix material (1),
- a plurality of fibres for reinforcement of the matrix material, and
- at least one thermoplastic additive material (2) for enhancing a fracture toughness of the fibre reinforced plastic composite;
wherein
- the thermoplastic additive material (2) is dissolved in the matrix material.

2. Fibre reinforced plastic composite according to claim 1, **characterised in that**
the thermoplastic additive material (2) comprises a polymer.

3. Fibre reinforced plastic composite according to any one of the claims 1 or 2,
**characterised in that**
the matrix material (1) comprises a thermosetting material, in particular a thermosetting polymer.

4. Fibre reinforced plastic composite according to any one of the claims 1 to 3,
**characterised in that**
the matrix material (1) comprises at least one material which is selected from the group consisting of polyester, polyurethane, a biopolymer and a resin, in particular an epoxy resin.

5. Fibre reinforced plastic composite according to any one of the claims 1 to 4,
**characterised in that**
the matrix material (1) comprises a thermoplastic matrix material, in particular acrylonitrile butadiene styrene and/or nylon.

6. Fibre reinforced plastic composite according to any one of the claims 1 to 5,
**characterised in that**
the thermoplastic additive material (2) comprises polyvinyl butyral and/or polyethylene terephthalate.

7. Fibre reinforced plastic composite according to any one of the claims 1 to 6,
**characterised in that**
a ratio of a weight of the thermoplastic additive material (2) and a weight of the matrix material (1) is selected from a range of 0.0005 to 0.2, in particular from a range of 0.001 to 0.1.

8. Fibre reinforced plastic composite according to any one of the claims 1 to 6,
**characterised in that**
a ratio of a weight of the matrix material (1) and a weight of the thermoplastic additive material (2) is selected from a range of 0.0005 to 0.2, in particular from a range of 0.001 to 0.1.

9. Fibre reinforced plastic composite according to any one of the claims 1 to 8,
**characterised in that**
the plurality of fibres comprises a fibre material and that the fibre material comprises an elastic modulus exceeding 50 GPa, in particular exceeding 70 GPa, and/or the matrix material (1) comprises an elastic modulus below 5 GPa, in particular below 3 GPa.

10. Plastic composite starting material comprising a base material and at least one thermoplastic additive material (2) for enhancing a fracture toughness of a fibre reinforced plastic composite,
wherein
the thermoplastic additive material (2) is dissolved in the base material.

11. Plastic composite starting material according to claim 10,
**characterised in that**
the base material comprises at least one kind of a liquid thermosetting resin.

12. Plastic composite starting material according to any one of the claims 10 or 11,
**characterised in that**
the plastic composite starting material comprises at least one curing agent.

13. Plastic composite starting material according to any one of the claims 10 to 12,
**characterised in that**
- the plastic composite starting material is arranged and prepared for manufacturing a fibre reinforced plastic composite, the fibre reinforced plastic composite comprising a matrix material (1), at least one fibre and the thermoplastic additive material (2); and
- the plastic composite starting material comprises at least one coupling agent (4) for coupling the matrix material and/or the thermoplastic additive material (2) with the fibre.

14. Plastic composite starting material according to claim 13,
**characterised in that**
the coupling agent (4) comprises silane.

15. Component of a wind turbine, in particular of a wind turbine rotor blade, comprising a fibre reinforced plastic composite according to any one of the claims 1 to 9.

16. Method of manufacturing a fibre reinforced plastic composite,
wherein the fibre reinforced plastic composite comprises a thermoplastic additive material (2), and the method comprises
- providing a mixture comprising a plurality of fibres and a plastic composite starting material, wherein the plastic composite starting material is obtained by dissolving the thermoplastic additive material (2) in a base material, and
- curing the mixture.
